# EUROPÄISCHE PATENTSCHRIFT

(11) **EP 2 353 346 B1**
(45) Veröffentlichungstag und Bekanntmachung des Hinweises auf die Patenterteilung: **01.08.2018**
(21) Anmeldenummer: 09760739.4
(22) Anmeldetag: 18.11.2009
(51) Int. Cl.: H05B 37/02, H05B 37/03, H02J 9/02

(54) **BELEUCHTUNGSSYSTEM MIT SICHERHEITSBELEUCHTUNG**
LIGHTING SYSTEM HAVING SECURITY LIGHTING
SYSTÈME D'ÉCLAIRAGE DOTÉ D'UN ÉCLAIRAGE DE SÉCURITÉ

(30) Priorität: 19.11.2008 DE 102008057976
(43) Veröffentlichungstag der Anmeldung: 10.08.2011
(73) Patentinhaber: Zumtobel Lighting GmbH, 6850 Dornbirn (AT)
(72) Erfinder: WOHLGENANNT, Rochus, A-6850 Dornbirn (AT); HEIM, Armin, A-6900 Bregenz (AT); KLOCKER, Bernhard, A-6850 Dornbirn (AT); WITTMANN, Gerhard, 81247 München (DE); SCHÖNAUER, Michael, 81243 München (DE)
(74) Vertreter: Thun, Clemens
(86) Internationale Anmeldenummer: PCT/EP2009/008210
(87) Internationale Veröffentlichungsnummer: WO 2010/057622

(56) Entgegenhaltungen:
- EP-A2- 1 724 903
- EP-A2- 1 724 903
- WO-A1-2005/032218
- WO-A1-2005/032218
- WO-A1-2005/101918
- WO-A1-2005/101918
- DE-A1- 19 611 161
- DE-A1- 19 611 161
- GB-A- 2 404 474
- GB-A- 2 404 474

## Beschreibung

Die vorliegende Erfindung betrifft ein Beleuchtungssystem mit einer Vielzahl von Leuchten, wobei das System einerseits Mittel zur Stromversorgung der Leuchten für eine Allgemeinbeleuchtung sowie andererseits Mittel zur Stromversorgung für eine Sicherheitsbeleuchtung aufweist.

Um den einschlägigen Sicherheitsvorschriften genügen zu können, weisen Beleuchtungssysteme für größere Gebäude oder Anlagen immer auch so genannte Sicherheitsleuchten auf, welche im Falle eines auftretenden Notzustandes eine Grundbeleuchtung bzw. Sicherheitsbeleuchtung sicherstellen. Selbst im Falle eines Stromausfalls soll hierdurch gewährleistet sein, dass in gewissen räumlichen Abständen Licht abgegeben wird um bspw. Fluchtwege ausreichend auszuleuchten. Die von der allgemeinen Stromversorgung üblicherweise getrennte bzw. unabhängige Notstromversorgung kann dabei über separate Leitungen zur Verfügung gestellt werden oder jeweils individuell in Form von Akkumulatoren oder dgl. vorliegen.

Aus dem Stand der Technik sind hierbei verschiedene Möglichkeiten bekannt, eine derartige Sicherheitsbeleuchtung zu realisieren. Beispielsweise werden oftmals spezielle Notlicht-Lampenbetriebsgeräte eingesetzt, welche einen eigenen Kleinspannungsakkumulator aufweisen, der während des Normalbetriebs des Beleuchtungssystems über die allgemeine Stromversorgung aufgeladen wird. Derartige Notlicht-Lampenbetriebsgeräte sind in der Lage, einen Ausfall der normalen Netzspannung zu erkennen und daraufhin automatisch einen Notbetrieb einzuleiten, bei dem die zugehörige Lampe unter Verwendung der in dem Akku gespeicherten Energie in einem vorgegebenen Notbetriebszustand, bspw. bei 70% der maximalen Helligkeit, betrieben wird.

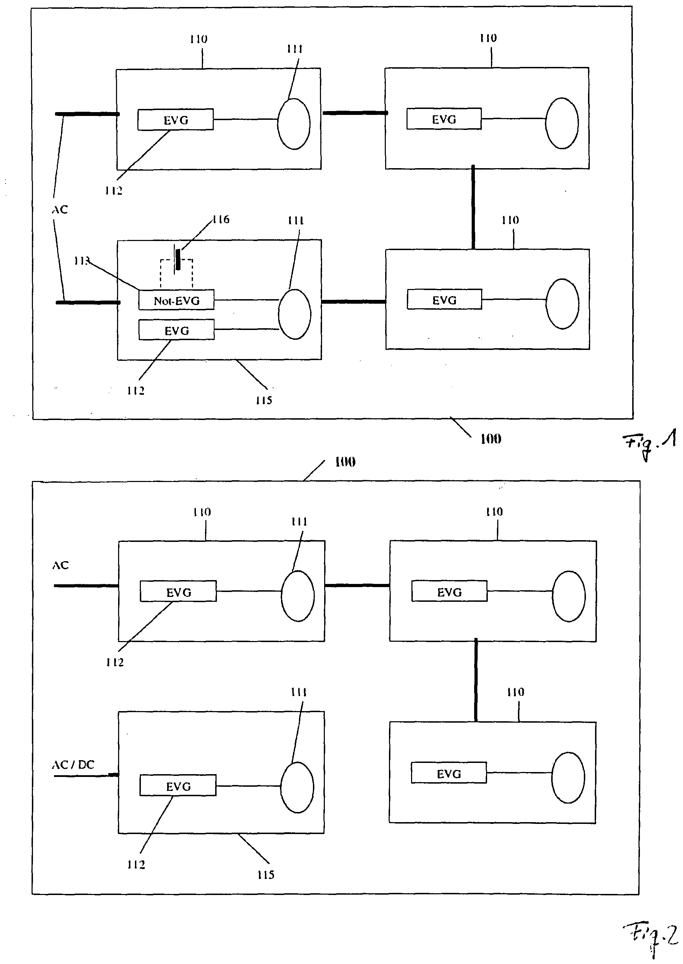

Ein derartiges klassisches Notlicht-Lampenbetriebsgerät ist üblicherweise dazu vorgesehen, die zugehörige Lampe auch tatsächlich lediglich während eines Notbetriebs anzusteuern. Soll die Lampe darüber hinaus auch während des Normalbetriebs des Beleuchtungssystems zum Einsatz kommen, so besteht entsprechend einem Vorschlag aus der WO 2005/032218 A1 der Anmelderin die Möglichkeit, das Notlicht-Lampenbetriebsgerät mit einem normalen bzw. herkömmlichen Lampenbetriebsgerät derart zu koppeln, dass beide Geräte ein Funktionspaar bilden, welches mit einer einzigen Lampe verbunden ist. Eine derartige Lösung ist schematisch in Fig. 1 dargestellt, welche die Anordnung mehrerer Leuchten 110, 115 in einem Raum 100 zeigt. Drei der dargestellten Leuchten sind hierbei klassische Leuchten 110 mit einer Lampe 111 und einem zugehörigen Lampenbetriebsgerät 112, beispielsweise einem EVG, die für den Normalbetrieb des Beleuchtungssystems vorgesehen sind. Bei der vierten Leuchte handelt es sich um eine Sicherheitsleuchte 115. Diese weist entsprechend der Darstellung einerseits ein Notlicht-Lampenbetriebsgerät 113 mit Akkumulator 116 und andererseits ein Normal-Lampenbetriebsgerät 112 auf, wobei das Normal-Lampenbetriebsgerät 112 die zugehörige Lampe 111 während eines Normalbetriebs des Systems ansteuert und das Notlicht-Lampenbetriebsgerät 113 lediglich während eines Notzustandes zum Einsatz kommt. Diese dargestellte Variante bringt den Vorteil mit sich, dass sämtliche Leuchten 110, 115 des Systems während eines Normalbetriebs verwendet werden können und zunächst nicht ersichtlich ist, bei welcher Leuchte es sich um die Sicherheitsleuchte handelt.

In Fig. 2 ist ferner die aus einer Zentral- oder Gruppenbatterie versorgte Variante dargestellt, wobei die Leuchte 115 - wie alle anderen Leuchten 110 - nur ein Lampenbetriebsgerät 112 (EVG) enthält, das mit AC oder DC betrieben werden kann und aus einer Zentral- oder Gruppenbatterieanlage, die bei Ausfall der Allgemeinstromversorgung automatisch auf Batterieversorgung umschaltet, versorgt wird.

Bei beiden oben beschriebenen Varianten besteht allerdings die Gefahr, dass im Falle eines Defekts einer Sicherheitsleuchte bzw. des zugehörigen Notlicht-Lampenbetriebsgeräts eine zuverlässige Aufrechterhaltung der Sicherheitsbeleuchtung nicht mehr gewährleistet ist. Fällt bspw. bei dem in Fig. 1 dargestellten Beispiel das Notlicht-Lampenbetriebsgerät 113 oder bei dem in Fig. 2 dargestellten Beispiel in der Leuchte 115 das Lampenbetriebsgerät 112 aus, so muss dieses umgehend ersetzt bzw. repariert werden, da andernfalls der Raum keine Sicherheitsbeleuchtung mehr aufweisen würde. Dies bedeutet, dass ein dauerhaftes Zurverfügungstellen einer ausreichenden Sicherheitsbeleuchtung mit einem extrem hohen Wartungsaufwand verbunden ist, da erkannte Defekte umgehend und aufwändig behoben werden müssen.

Um diesen Wartungsaufwand leisten zu können ist ferner in der GB 2 404 474 A ein Testsystem vorgeschlagen, das automatisch die Betriebsfähigkeit der Notleuchten auf Anfrage oder in vorgegebenen Zeitabständen überprüft. Ferner kann das Testsystem zu einem Steuerungssystem für die Allgemeinbeleuchtung mit einer zentralen Steuereinheit erweitert werden. Die zentrale Steuereinheit kann dann beispielsweise auch auf Basis von Sensorsignalen festlegen, ob es notwendig ist, bestimmte Abschnitte von Gebäuden in Notbeleuchtung einzubeziehen, sodass eine bedarfsgesteuerte Auswahl von Notleuchten realisiert ist. Damit wird eine Verbesserung der Laufzeit im Notbeleuchtungsfall angestrebt.

Der vorliegenden Erfindung liegt deshalb die Aufgabe zugrunde, eine neuartige Lösung anzugeben, mit deren Hilfe die oben beschriebenen Probleme vermieden werden können.

Die Aufgabe wird durch ein Beleuchtungssystem, welches die Merkmale des Anspruchs 1 oder 2 aufweist, gelöst. Vorteilhafte Weiterbildungen der Erfindung sind Gegenstand der abhängigen Ansprüche.

Die erfindungsgemäße Lösung beruht auf der Idee, das Beleuchtungssystem derart auszugestalten, dass im Falle des Ausfalls einer Sicherheitsleuchte eine andere, sich möglichst in der Nähe befindende Leuchte des Systems umgehend die Aufgabe der defekten Sicherheitsleuchte übernehmen kann. Hierzu ist vorgesehen, dass mehrere Leuchten des erfindungsgemäßen Beleuchtungssystems potentiell in der Lage sind, die Funktion einer Sicherheitsleuchte zu erfüllen, wobei von diesen zur Verfügung stehenden Leuchten dann einige ausgewählt und als Sicherheitsleuchten genutzt werden. Sollte nunmehr eine der ausgewählten Sicherheitsleuchten ausfallen, so wird deren Funktion umgehend von einer anderen Leuchte, die in der Lage ist, einen Notbetriebszustand einzunehmen, übernommen.

Gemäß einem ersten Aspekt der vorliegenden Erfindung wird dementsprechend ein Beleuchtungssystem vorgeschlagen, welches eine Vielzahl von Leuchten, Mittel zur Stromversorgung der Leuchten für eine Allgemeinbeleuchtung sowie Mittel zur Stromversorgung für eine Sicherheitsbeleuchtung aufweist. Zumindest ein Teil der Leuchten des erfindungsgemäßen Beleuchtungssystems ist dabei sowohl mit den Mitteln zur Stromversorgung für die Allgemeinbeleuchtung als auch mit den Mitteln zur Stromversorgung für die Sicherheitsbeleuchtung verbunden, wobei von diesen Leuchten einzelne Leuchten wahlweise als Sicherheitsleuchten auswählbar sind, derart, dass sie im Falle eines Not-/Sicherheitsbetriebs auf Basis der durch die Mittel zur Stromversorgung für die Sicherheitsbeleuchtung zur Verfügung gestellten Energie einen Notbetriebszustand einnehmen,. wobei das System eine zentrale Steuereinheit sowie eine mit der zentralen Steuereinheit verbundene Umschalteinheit aufweist, wobei der Umschalteinheit zumindest zwei Leuchten zugeordnet sind und eine der beiden Leuchten als Sicherheitsleuchte bestimmt ist,
und wobei die Steuereinheit dazu ausgebildet ist, im Falle eines Ausfalls der Leuchte, die als Sicherheitsleuchte bestimmt ist, die Umschalteinheit dazu zu veranlassen, eine andere der zumindest zwei Leuchten, die noch nicht als Sicherheitsleuchte ausgewählt wurde, als neue Sicherheitsleuchte zu bestimmen.

Gemäß einem zweiten Aspekt wird ein Beleuchtungssystem bereitgestellt, mit einer Vielzahl von Leuchten, Mitteln zur Stromversorgung der Leuchten für eine Allgemeinbeleuchtung sowie Mitteln zur Stromversorgung für eine Sicherheitsbeleuchtung, wobei zumindest ein Teil der Leuchten sowohl mit den Mitteln zur Stromversorgung für die Allgemeinbeleuchtung als auch mit den Mitteln zur Stromversorgung für die Sicherheitsbeleuchtung verbunden ist, und wobei von diesen mit beiden Stromversorgungsmitteln verbundenen Leuchten einzelne Leuchten wahlweise als Sicherheitsleuchten auswählbar sind, derart, dass sie im Falle eines Not-/Sicherheitsbetriebs auf Basis der durch die Mittel zur Stromversorgung für eine Sicherheitsbeleuchtung zur Verfügung gestellten Energie einen Notbetriebszustand einnehmen,
wobei das System eine Umschalteinheit aufweist, der zumindest zwei Leuchten zugeordnet sind, wobei eine der beiden Leuchten als Sicherheitsleuchte bestimmt ist, wobei die Umschalteinheit dazu ausgebildet ist, im Falle eines Ausfalls der Leuchte, die als Sicherheitsleuchte bestimmt ist, eine andere der zumindest zwei Leuchten, die noch nicht als Sicherheitsleuchte ausgewählt wurde, als neue Sicherheitsleuchte zu bestimmen.

Letztendlich eröffnet also das erfindungsgemäße System die Möglichkeit, äußerst flexibel auf Probleme bei einzelnen Sicherheitsleuchten reagieren zu können. Ist eine Sicherheitsleuchte defekt bzw. nicht mehr vollständig funktionsfähig, so kann ohne größeren Aufwand - ggf. sogar automatisch - eine andere Leuchte deren Aufgabe als Sicherheitsleuchte übernehmen, ohne dass zunächst Wartungsarbeiten an der defekten Leuchte erforderlich wären. Es ist dementsprechend deutlich einfacher, dauerhaft eine ausreichende Sicherheitsbeleuchtung zur Verfügung zu stellen, was im Hinblick auf die Aufgabe, die einschlägigen Sicherheitsnormen einzuhalten, deutliche Vorteile mit sich bringt.

Wie bereits zuvor erwähnt wurde, ist gemäß der Erfindung vorgesehen, dass im Falle eines Ausfalls einer Sicherheitsleuchte automatisch deren Funktion durch eine sich zumindest in der Nähe befindende andere Leuchte übernommen wird. Das Auswählen einer neuen Sicherheitsleuchte kann hierbei durch eine zentrale Steuereinheit des Beleuchtungssystems erfolgen.

Bei den Mitteln zur Stromversorgung für die Sicherheitsbeleuchtung kann es sich bspw. um ein von dem ersten Stromversorgungssystem für die Allgemeinbeleuchtung getrenntes Stromversorgungsnetz handeln. Denkbar wäre allerdings auch, dass beide Stromversorgungssysteme die gleichen Leitungen benutzen und in einem Notbetriebszustand das gesamte System von einer unabhängigen Energiequelle, bspw. einem Generator oder dgl. gespeist wird. In diesem Fall wären potentiell sämtliche Leuchten dazu geeignet, als Sicherheitsleuchten ausgewählt zu werden. Allerdings wäre es selbstverständlich auch denkbar, dass die potentiellen Sicherheitsleuchten jeweils eigene Energiespeicher in Form von Akkumulatoren oder dgl. aufweisen, die während eines Normalbetriebs des Systems aufgeladen werden.

Letztendlich ist also das erfindungsgemäße System äußerst flexibel einsetzbar, wobei insbesondere die Sicherheitsbeleuchtung umgehend an sich veränderte Situationen angepasst werden kann.

Nachfolgend soll die Erfindung anhand der beiliegenden Zeichnung näher erläutert werden. Es zeigen:
- Fig. 1: die schematische Ansicht eines Ausschnitts eines Beleuchtungssystems mit Sicherheitsbeleuchtung gemäß dem Stand der Technik als Einzelbatterieversorgte Sicherheits-/Notleuchte;
- Fig. 2: die schematische Ansicht eines Ausschnitts eines Beleuchtungssystems mit Sicherheitsbeleuchtung gemäß dem Stand der Technik als Zentral- oder Gruppenbatterie-versorgte Sicherheits-/Notleuchte; und
- Fig. 3: ein erfindungsgemäßen Beleuchtungssystem in schematischer Darstellung.

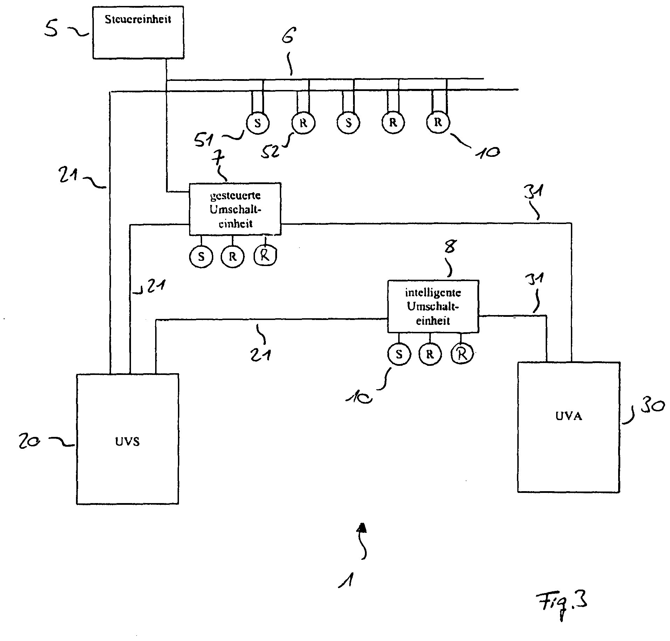

Die Ausgestaltung der bekannten Systeme in den Fig. 1 und 2 wurde bereits erläutert. Wie erwähnt weist hierbei eine Sicherheitsleuchte entweder zwei Lampenbetriebsgeräte, eines für den Normalbetrieb und eines für den Notbetrieb auf, wobei diese Geräte je nach Zustand des Gesamtsystems aktiv sind, oder eine Sicherheits-/Notleuchte wird aus einer Zentral- oder Gruppenbatterieanlage versorgt. Fällt das Not-Lampenbetriebsgerät oder das Lampenbetriebsgerät in der Sicherheitsleuchte allerdings aus, so muss dieses umgehend ausgewechselt werden, um die Sicherheitsbeleuchtung aufrecht zu erhalten. Genau diese Problematik wird mit dem nachfolgend anhand von Fig. 3 näher erläuterten erfindungsgemäßen Beleuchtungssystem vermieden.

Bei dem allgemein mit dem Bezugszeichen 1 versehenen erfindungsgemäßen Beleuchtungssystem handelt es sich um ein System, welches zur Beleuchtung größerer Gebäude oder Anlagen vorgesehen ist. Das Beleuchtungssystem 1 weist eine Vielzahl von Leuchten 10 auf, die an unterschiedlichen Positionen des Gebäudes bzw. der Anlage angeordnet sein können. Ein Teil der Leuchten 10 ist dabei über eine Bus- oder Datenleitung 6 mit einer zentralen Steuereinheit 5 des System 1 verbunden und kann dementsprechend von der Zentrale 5 aus angesteuert werden. Andere Leuchten 10 wiederum können lediglich dezentral durch entsprechende Bedienelemente betrieben werden und/oder passen automatisch ihre Helligkeit in Abhängigkeit von entsprechenden Helligkeits- und/oder Bewegungssensoren an.

Wesentlich ist, dass das gesamte System 1 zusätzlich auch eine Sicherheitsbeleuchtung beinhaltet, das heißt, im Falle eines Not-/ Sicherheitszustands, der beispielsweise zu einem zumindest teilweisen Ausfall der allgemeinen Beleuchtung führt, sollen zumindest einige der Leuchten 10 nach wie vor Licht abgeben, um beispielsweise Rettungswege und dergleichen ausreichend auszuleuchten. Einschlägige Normen geben hierbei vor, in welchen Abständen derartige sogenannte Sicherheitsleuchten anzuordnen sind und wie hoch die von ihnen abgegebene Helligkeit sein muss.

Das erfindungsgemäße System 1 zeichnet sich nunmehr dadurch aus, dass potentiell alle Leuchten 10 auch als Sicherheitsleuchten arbeiten können. Hierfür ist zunächst Voraussetzung, dass die Leuchten 10 im Falle eines Not-/Sicherheitsbetriebs mit Energie versorgt werden, was im dargestellten Ausführungsbeispiel dadurch erzielt wird, dass die Leuchten 10 über separate Leitungen 21 mit einer Versorgungseinheit 20 (UVS: Unterverteilung Sicherheitsbeleuchtung) verbunden sind. Getrennt hiervon über weitere Leitungen 31 sind die Leuchten 10 allerdings auch mit einer weiteren Energieversorgungseinheit 30 (UVA: Unterverteilung Allgemeinbeleuchtung) verbunden. Letztendlich werden also zwei getrennte Stromversorgungssysteme gebildet, ein erstes für die Allgemeinbeleuchtung und ein zweites für die Sicherheitsbeleuchtung.

Anzumerken hierbei ist, dass im dargestellten Ausführungsbeispiel voneinander getrennte Leitungen für den Anschluss der Leuchten 10 an die Stromversorgungseinheiten 20 und 30 benutzt werden, wobei es allerdings auch denkbar wäre, dass beide Einheiten 20, 30 gemeinsame Leitungen nutzen. Im Falle des Ausfalls der allgemeinen Stromversorgung würde dann die Einheit 20, die beispielsweise durch einen Generator gebildet ist, über die gemeinsamen Stromversorgungsleitungen die Leuchten 10 mit Energie versorgen. Ferner wäre es auch denkbar, dass die Leuchten 10 jeweils ein eigenes Stromversorgungssystem für die Sicherheitsbeleuchtung beinhalten. Dies kann beispielsweise durch einen Akkumulator gebildet sein, der während des Normalbetriebs über die allgemeine Stromversorgung aufgeladen wird und im Falle eines Not-/Sicherheitsbetriebs die zugehörige Leuchte mit Energie versorgt. Wesentlich ist, dass zumindest ein Teil der Leuchten 10 des Systems 1 sowohl während des Normalbetriebs mit Energie versorgt wird, als auch im Falle eines Not-/ Sicherheitsbetriebs durch ein weiteres Stromversorgungssystem mit Energie versorgt werden könnte. Dies eröffnet die Voraussetzung für die nachfolgend erläuterte erfindungsgemäße Ausgestaltung des Systems.

Ausgehend davon nämlich, dass zumindest ein Teil der Leuchten 10 des erfindungsgemäßen Systems1 an beide Stromversorgungssysteme angeschlossen ist, ist nunmehr vorgesehen, dass von diesen Leuchten 10 einige ausgewählt und als Sicherheitsleuchten genutzt werden. Bei dem dargestellten Ausführungsbeispiel gemäß Fig. 3 handelt es sich um diejenigen Leuchten, welche zusätzlich die Bezeichnung "S" tragen. Diese Leuchten mit ihren zugehörigen Lampenbetriebsgeräten arbeiten während eines Normalbetriebs des Systems 1 vollkommen normal, also in gleicher Weise wie sämtliche anderen Leuchten 10. Im Falle eines Not-/Sicherheitsbetriebs allerdings nehmen diese Sicherheitsleuchten S einen vorgegebenen Notbetriebszustand ein, über den die vorgeschriebene Sicherheitsbeleuchtung erzielt wird. Wesentlich hierbei ist, dass das Lampenbetriebsgerät einer auf diese Weise gebildeten Sicherheitsleuchte in beiden Betriebsarten (Normalbetrieb und Not-/Sicherheitsbetriebs) aktiv ist, also im Gegensatz zu der aus dem Stand der Technik bekannten und in Figur 1 dargestellten Lösung keine zwei verschiedenen Lampenbetriebsgeräte erforderlich sind.

Diese Sicherheitsleuchten S werden in einem Not-/Sicherheitsbetrieb also durch das zweite Stromversorgungssystem mit Energie versorgt und betreiben beispielsweise die zugehörigen Lichtquellen bei einem vorgegebenen Richtwert - zum Beispiel bei 70% der Maximalhelligkeit. Auf diesem Wege ist es sichergestellt, dass Fluchtwege oder andere wichtige Orte des Gebäudes bzw. der Anlage in ausreichender Weise ausgeleuchtet werden.

Dabei sind unterschiedliche Möglichkeiten denkbar, die Sicherheitsleuchten S dazu zu veranlassen, den Notbetriebszustand einzunehmen. Einerseits könnte dies beispielsweise durch die zentrale Steuereinheit 5 vorgegeben werden, welche einen entsprechenden Befehl auf die Steuerleitungen 6, welche zu den Leuchten 10 führen, gibt. Andererseits wäre auch die Aktivierung der Sicherheitsbeleuchtung durch dezentrale Steuereinrichtungen wie Rauchmelder oder dgl. denkbar. Schließlich wäre es auch möglich, dass die Sicherheitsleuchten S den Zustand des ersten Stromversorgungssystems für die Allgemeinbeleuchtung überwachen und für den Fall, dass sie Probleme in der allgemeinen Stromversorgung feststellen, automatisch bzw. selbstständig den Notbetriebszustand einnehmen.

Fällt nunmehr eine der Sicherheitsleuchten S aus, so war es bislang erforderlich, diese Leuchte umgehend zu reparieren bzw. auszuwechseln, um weiterhin in ausreichendem Maße die vorgeschriebene Sicherheitsbeleuchtung zur Verfügung stellen zu können. Dies ist bei dem erfindungsgemäßen System 1 nun nicht mehr erforderlich, da weitere Leuchten - im dargestellten Beispiel mit "R" bezeichnet - vorsorglich mit dem zweiten Stromversorgungssystem für die Sicherheitsbeleuchtung verbunden sind und dementsprechend potentiell als neue Sicherheitsleuchte verwendet werden können. Fällt dementsprechend tatsächlich eine als Sicherheitsleuchte S deklarierte Leuchte 10 aus, so ist nunmehr vorgesehen, dass deren Aufgabe umgehend von der nächstliegenden, als Ersatz bereitstehenden Leuchte 10 übernommen wird. Wird beispielsweise ein Problem mit der mit dem Bezugszeichen 51 versehenen Leuchte, welche eine Sicherheitsleuchte darstellt, festgestellt, so wird nunmehr gemäß der vorliegenden Erfindung in einfacher Weise eine der benachbarten Leuchten, im dargestellten Ausführungsbeispiel die Leuchte 52 als neue Sicherheitsleuchte ausgewählt. Diese Leuchte übernimmt damit umgehend die Funktion der ausgefallenen Sicherheitsleuchte, sodass weiterhin in ausreichender Weise eine Sicherheitsbeleuchtung gewährleistet wäre.

Das Auswählen einer (Ersatz-)Leuchte als neue Sicherheitsleuchte kann beispielsweise durch die Übermittlung eines entsprechenden Steuerbefehls durch die zentrale Steuereinheit 5 veranlasst werden. Dieser Steuerbefehl hat zur Folge, dass die den Befehl empfangende Leuchte umgehend die Funktion als Sicherheitsleuchte übernimmt. Wie im oberen Bereich der Figur 2 dargestellt, ist diese Möglichkeit dann gegeben, wenn die Leuchten 10 über eine Busleitung 6 mit der zentralen Steuereinheit 5 verbunden sind.

Ferner besteht allerdings auch die Möglichkeit, diese Verwaltung der Sicherheitsbeleuchtung durch entsprechende Umschalteinheiten vorzunehmen, wie sie im dargestellten Beispiel mit den Bezugszeichen 7 und 8 gezeichnet sind. Die Umschalteinheit 7 steht hierbei wiederum in Verbindung mit der zentralen Steuereinheit 5 und ist ferner für die Verwaltung von insgesamt drei Leuchten verantwortlich, von denen eine als Sicherheitsleuchte ausgewählt wurde. Wird bei dieser Leuchte ein Problem festgestellt, so kann die Umschalteinheit 7 nach entsprechender Veranlassung durch die zentrale Steuereinheit 5 eine der beiden weiteren Leuchten als neue Sicherheitsleuchte deklarieren

Abgesehen von der Variante des manuellen Auswählens einer Sicherheitsleuchte besteht ein besonderer Vorteil der erfindungsgemäßen Lösung auch darin, dass der Vorgang des Auswählens automatisch bzw. selbständig erfolgen kann. Die zentrale Steuereinheit 5 bzw. die Umschalteinheiten 7, 8 sind also vorzugsweise derart ausgestaltet, dass diese den Defekt bzw. Betriebsstörung einer ausgewählten Sicherheitsleuchte erkennen. Dies kann beispielsweise durch regelmäßiges Abfragen des Betriebszustands der Leuchten erfolgen. Wird nun ein Ausfall einer Sicherheitsleuchte erkannt, so wird durch die Zentrale 5 bzw. die Umschalteinheit 7, 8 dies erkannt und automatisch eine neue Sicherheitsleuchte selektiert.

Aus den obigen Schilderungen des erfindungsgemäßen Beleuchtungssystems wird deutlich, dass das System in äußerst flexibler Weise an sich ändernder Verhältnisse angepasst werden kann. Insbesondere können durch eine entsprechende Ansteuerung umgehend Leuchten als neue Sicherheitsleuchten eingesetzt werden, was letztendlich zur Folge hat, dass im Falle des Ausfalls einzelner Sicherheitsleuchten trotz allem dauerhaft eine ausreichende Sicherheitsbeleuchtung gewährleistet ist. Hierbei ist nicht zwingend erforderlich, dass - wie im dargestellten Ausführungsbeispiel - sämtliche Leuchten des Systems potentiell als Sicherheitsleuchten zum Einsatz kommen können. Vielmehr ist es ausreichend, wenn zumindest ein Teil der Leuchten mit beiden Stromversorgungssystemen verbunden ist und dementsprechend die Möglichkeit besteht, jede Leuchte dieser Gruppe ebenfalls zu einer Sicherheitsleuchte zu deklarieren.

## Patentansprüche

1. Beleuchtungssystem (1), mit
einer Vielzahl von Leuchten (10), Mitteln zur Stromversorgung der Leuchten (10) für eine Allgemeinbeleuchtung (30, 31) sowie Mitteln zur Stromversorgung für eine Sicherheitsbeleuchtung (20, 21),
wobei zumindest ein Teil der Leuchten (10) sowohl mit den Mitteln zur Stromversorgung für die Allgemeinbeleuchtung (30, 31) als auch mit den Mitteln zur Stromversorgung für die Sicherheitsbeleuchtung (20, 21) verbunden ist, und
wobei von diesen mit beiden Stromversorgungsmitteln verbundenen Leuchten (10) einzelne Leuchten wahlweise als Sicherheitsleuchten (S) auswählbar sind, derart, dass sie im Falle eines Not-/Sicherheitsbetriebs auf Basis der durch die Mittel zur Stromversorgung für eine Sicherheitsbeleuchtung (20, 21) zur Verfügung gestellten Energie einen Notbetriebszustand einnehmen,
**dadurch gekennzeichnet,**
**dass** das System eine zentrale Steuereinheit (5) sowie eine mit der zentralen Steuereinheit (5) verbundene Umschalteinheit (7) aufweist, wobei der Umschalteinheit (7) zumindest zwei Leuchten (10) zugeordnet sind und eine der beiden Leuchten (10) als Sicherheitsleuchte (S) bestimmt ist,
und wobei die Steuereinheit (5) dazu ausgebildet ist, im Falle eines Ausfalls der Leuchte, die als Sicherheitsleuchte (S) bestimmt ist, die Umschalteinheit (7) dazu zu veranlassen, eine andere der zumindest zwei Leuchten (10), die noch nicht als Sicherheitsleuchte ausgewählt wurde, als neue Sicherheitsleuchte (S) zu bestimmen.

2. Beleuchtungssystem (1), mit
einer Vielzahl von Leuchten (10), Mitteln zur Stromversorgung der Leuchten (10) für eine Allgemeinbeleuchtung (30, 31) sowie Mitteln zur Stromversorgung für eine Sicherheitsbeleuchtung (20, 21),
wobei zumindest ein Teil der Leuchten (10) sowohl mit den Mitteln zur Stromversorgung für die Allgemeinbeleuchtung (30, 31) als auch mit den Mitteln zur Stromversorgung für die Sicherheitsbeleuchtung (20, 21) verbunden ist, und
wobei von diesen mit beiden Stromversorgungsmitteln verbundenen Leuchten (10) einzelne Leuchten wahlweise als Sicherheitsleuchten (S) auswählbar sind, derart, dass sie im Falle eines Not-/Sicherheitsbetriebs auf Basis der durch die Mittel zur Stromversorgung für eine Sicherheitsbeleuchtung (20, 21) zur Verfügung gestellten Energie einen Notbetriebszustand einnehmen,
**dadurch gekennzeichnet,**
**dass** das System eine Umschalteinheit (8) aufweist, der zumindest zwei Leuchten (10) zugeordnet sind, wobei eine der beiden Leuchten (10) als Sicherheitsleuchte (S) bestimmt ist,
wobei die Umschalteinheit (8) dazu ausgebildet ist, im Falle eines Ausfalls der Leuchte, die als Sicherheitsleuchte (S) bestimmt ist, eine andere der zumindest zwei Leuchten (10), die noch nicht als Sicherheitsleuchte ausgewählt wurde, als neue Sicherheitsleuchte (S) zu bestimmen.

3. Beleuchtungssystem nach einem der vorherigen Ansprüche,
**dadurch gekennzeichnet,**
**dass** alle Leuchten (10) des Systems (1) mit beiden Stromversorgungsmitteln verbunden sind.

4. Beleuchtungssystem nach einem der vorherigen Ansprüche,
**dadurch gekennzeichnet,**
**dass** die Mittel zur Stromversorgung der Leuchten (10) für die Allgemeinbeleuchtung (30, 31) und die Mittel zur Stromversorgung für die Sicherheitsbeleuchtung (20, 21) durch zwei voneinander getrennte Stromversorgungsnetze gebildet sind.

5. Beleuchtungssystem nach einem der Ansprüche 1 bis 3,
**dadurch gekennzeichnet,**
**dass** die Mittel zur Stromversorgung für die Sicherheitsbeleuchtung (20, 21) durch den Leuchten (10) zugeordnete Energiespeichereinheiten, insbesondere Akkumulatoren gebildet sind.

6. Beleuchtungssystem nach einem der vorherigen Ansprüche,
**dadurch gekennzeichnet,**
**dass** die Leuchten (10) welche mit beiden Stromversorgungsmitteln verbunden sind und als Sicherheitsleuchte (S) ausgewählt wurden, ein Lampenbetriebsgerät aufweisen, welches die zugehörige Lampe sowohl während das Normalbetriebs als auch während das Not-/Sicherheitsbetriebs betreibt.

## Claims

1. A lighting system (1), having
a plurality of luminaires (10), means for power supply to the luminaires (10) for general lighting (30, 31) as well as means for power supply for security lighting (20, 21), wherein at least some of the luminaires (10) are connected both to the means for the power supply for the general lighting (30, 31) as well as to the means for power supply for the security lighting (20, 21), and wherein of said luminaires (10) connected to both power supply means, individual luminaires can be optionally selected as security luminaires (S) in such a manner that in the event of emergency/security operation, they assume a state of emergency operation on the basis of the energy supplied by the means for power supply for security lighting (20, 21),
**characterized in**
**that** the system has a central control unit (5) as well as a switch unit (7) connected to the central control unit (5), wherein at least two luminaires (10) are assigned to the switch unit (7) and one of the two luminaires (10) is designated as a security luminaire (S), and wherein the control unit (5) is designed, in the event of a failure of the luminaire, which is designated as a security luminaire (S), to induce the switch unit (7) to designate another one of the at least two luminaires (10), which was not yet selected as a security luminaire, as a new security luminaire (S).

2. A lighting system (1), having
a plurality of luminaires (10), means for power supply to the luminaires (10) for general lighting (30, 31) as well as means for power supply for security lighting (20, 21), wherein at least some of the luminaires (10) are connected both to the means for the power supply for the general lighting (30, 31) as well as to the means for power supply for the security lighting (20, 21), and wherein of said luminaires (10) connected to both power supply means, individual luminaires can be optionally selected as security luminaires (S), in such a manner that in the event of emergency/security operation, they assume a state of emergency operation on the basis of the energy supplied by the means for power supply for security lighting (20, 21),
**characterized in**
**that** the system has a switch unit (8), to which at least two luminaires (10) are assigned, wherein one of the two luminaires (10) is designated as a security luminaire (S), wherein the switch unit (8) is designed, in the event of a failure of the luminaire, which is designated as a security luminaire (S), to designate another one of the at least two luminaires (10), which was not yet selected as a security luminaire, as a new security luminaire (S).

3. A lighting system according to any one of the preceding claims,
**characterized in**
**that** all luminaires (10) of the system (1) are connected to both power supply means.

4. A lighting system according to any one of the preceding claims,
**characterized in**
**that** the means for the power supply of the luminaires (10) for the general lighting (30, 31) and the means for the power supply for the security lighting (20, 21) are formed by two mutually separate power supply networks.

5. A lighting system according to any one of Claims 1 to 3,
**characterized in**
**that** the means for the power supply for the security lighting (20, 21) are formed by energy storage units, in particular, storage batteries, assigned to the luminaires (10).

6. A lighting system according to any one of the preceding claims
**characterized in**
**that** the luminaires (10), which are connected to the two power supply means and were selected as security luminaires (S), have a lamp operating device, which operates the associated lamp both during normal operation as well as during emergency/security operation.

## Revendications

1. Système d'éclairage (1) avec
une pluralité de luminaires (10), de moyens d'alimentation électrique des luminaires (10) pour un éclairage général (30, 31) ainsi que de moyens d'alimentation électrique pour un éclairage de sécurité (20, 21),
au moins une partie des luminaires (10) étant reliés aussi bien avec les moyens d'alimentation électrique pour l'éclairage général (30, 31) qu'avec les moyens d'alimentation électrique pour l'éclairage de sécurité (20, 21) et
parmi ces luminaires (10) reliés avec les deux moyens d'alimentation électrique, des luminaires particuliers pouvant être sélectionnés en tant que luminaires de sécurité (S) de façon à ce que, dans le cas d'un fonctionnement de secours / de sécurité, ils adoptent un état de fonctionnement de secours sur la base de l'énergie mise à disposition par les moyens d'alimentation électrique pour un éclairage de sécurité (20, 21),
**caractérisé en ce que**
le système comprend une unité de commande centrale (5) ainsi qu'une unité de commutation (7) reliée avec l'unité de commande centrale (5), au moins deux luminaires (10) correspondant à l'unité de commutation (7) et un des deux luminaires (10) étant défini en tant que luminaire de sécurité (S),
et l'unité de commande (5) étant conçue pour faire en sorte, dans le cas d'une panne du luminaire qui est défini en tant que luminaire de sécurité (S), que l'unité de commutation (7) définisse en tant que nouveau luminaire de sécurité (S) un autre des au moins deux luminaires (10), qui n'a pas encore été sélectionné en tant que luminaire de sécurité.

2. Système d'éclairage (1) avec
une pluralité de luminaires (10), de moyens d'alimentation électrique des luminaires (10) pour un éclairage général (30, 31) ainsi que de moyens d'alimentation électrique pour un éclairage de sécurité (20, 21),
au moins une partie des luminaires (10) étant reliés aussi bien avec les moyens d'alimentation électrique pour l'éclairage général (30, 31) qu'avec les moyens d'alimentation électrique pour l'éclairage de sécurité (20, 21) et
parmi ces luminaires (10) reliés avec les deux moyens d'alimentation électrique, des luminaires particuliers pouvant être sélectionnés en tant que luminaires de sécurité (S) de façon à ce que, dans le cas d'un fonctionnement de secours / de sécurité, ils adoptent un état de fonctionnement de secours sur la base de l'énergie mise à disposition par les moyens d'alimentation électrique pour un éclairage de sécurité (20, 21),
**caractérisé en ce que**
le système comprend une unité de commutation (8) à laquelle correspondent au moins deux luminaires (10), un des deux luminaires (10) étant défini en tant que luminaire de sécurité (S),
l'unité de commutation (8) étant conçue pour définir, dans le cas d'une panne du luminaire qui est défini en tant que luminaire de sécurité (S), en tant que nouveau luminaire de sécurité (S), un autre des au moins deux luminaires (10) qui n'a pas encore été défini en tant que luminaire de sécurité.

3. Système d'éclairage selon l'une des revendications précédentes,
**caractérisé en ce que**
tous les luminaires (10) du système (1) sont reliés avec les deux moyens d'alimentation électrique.

4. Système d'éclairage selon l'une des revendications précédentes,
**caractérisé en ce que**
les moyens d'alimentation électrique des luminaires (10) pour l'éclairage général (30, 31) et les moyens d'alimentation électrique pour l'éclairage de sécurité (20, 21) sont constitués de deux réseaux d'alimentation électrique séparés entre eux.

5. Système d'éclairage selon l'une des revendications 1 à 3,
**caractérisé en ce que**
les moyens d'alimentation électrique pour l'éclairage de sécurité (20, 21) sont constitués d'unités d'accumulation d'énergie correspondant aux luminaires (10), plus particulièrement des accumulateurs.

6. Système d'éclairage selon l'une des revendications précédentes,
**caractérisé en ce que**
les luminaires (10) qui sont reliés avec les deux moyens d'alimentation électrique et qui ont été sélectionnés en tant que luminaire de sécurité (S) comprennent un dispositif de commande de lampes qui commande la lampe correspondante aussi bien pendant le fonctionnement normal que pendant le fonctionnement de secours/ de sécurité.
